# EUROPEAN PATENT APPLICATION

(11) **EP 1 879 033 A2**
(43) Date of publication of application: **16.01.2008**
(21) Application number: 07013515.7
(22) Date of filing: 10.07.2007
(51) Int. Cl.: G01P 3/44

(54) **Sensor-equipped rolling bearing apparatus**

(30) Priority: 10.07.2006 JP 2006188983
(71) Applicant: JTEKT Corporation, Osaka-shi Osaka 542-8502 (JP)
(72) Inventor: Adachi, Ken, Osaka-shi Osaka 542-8502 (JP); Ishikawa, Tetsuya, Osaka-shi Osaka 542-8502 (JP); Yamamoto, Seiji, Osaka-shi Osaka 542-8502 (JP); Yu, Changxin, Osaka-shi Osaka 542-8502 (JP)
(74) Representative: Schaeberle, Steffen

(57) **Abstract**

A sensor-equipped rolling bearing apparatus includes a hub spindle, an outer ring concentrically disposed around an outer periphery of the hub spindle, first and second inner rings fitted on the hub spindle to rotate together with the hub spindle, with ends of their smaller rib portions opposed to each other, two rows of tapered rollers disposed respectively between the outer ring and the first inner ring and between the outer ring and the second inner ring, and a sensor for detecting a rotating state of the hub spindle 11. A cylindrical portion is formed integrally at an end of the smaller rib portion of the first inner ring, and extends toward the end of the smaller rib portion of the second inner ring in an axial direction. A detection portion for enabling the sensor to detect the rotating state is formed on an outer peripheral surface of the cylindrical portion.

## Description

### BACKGROUND

This invention relates to a sensor-equipped rolling bearing apparatus for supporting, for example, a wheel of an automobile or the like.

Among rolling bearing apparatuses for supporting a wheel of an automobile or the like, there is a type incorporating a sensor device for detecting a rotational speed of the wheel so as to control an anti-lock braking system or the like.

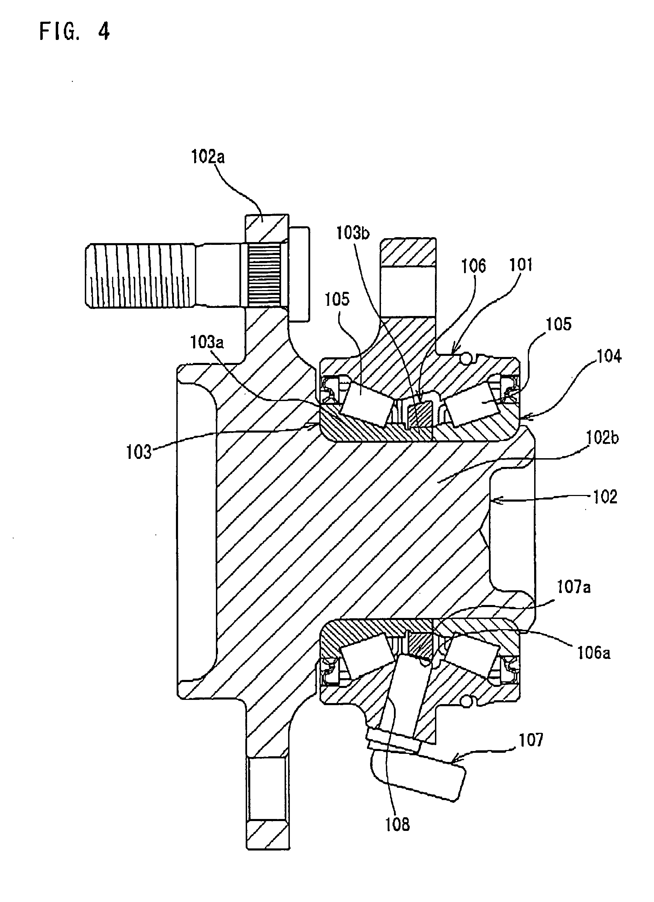

As shown in Fig. 4, the above conventional sensor-equipped rolling bearing apparatus comprises, for example, an outer ring 101, a hub spindle 102 concentrically disposed in an inner periphery of the outer ring 101 and having a wheel-mounting flange 102a, a pair of first and second inner rings 103 and 104 fitted on an outer peripheral surface of the hub spindle 102, a plurality (first row) of tapered rollers 105 interposed between the first inner ring 103 and the outer ring 101, and a plurality (second row) of tapered rollers 105 interposed between the second inner ring 104 and the outer ring 101. This sensor-equipped rolling bearing apparatus further comprises an annular pulsar ring 106 having a detection portion 106a formed on its outer peripheral surface and fitted on a cylindrical portion 103b extending axially from a rib portion of the inner ring 103, and a sensor 107 fixedly fitted in a mounting hole 108 (formed in the outer ring 101 and extending from an inner peripheral surface thereof to an outer peripheral surface thereof) in closely-spaced, opposed relation to the detection portion 106a (see, for example, JP-A-2003-130063).

In the above conventional sensor-equipped rolling bearing apparatus, the pulsar ring 106 was press-fitted on the outer periphery of the cylindrical portion 103b of the inner ring 103 press-fitted on the hub spindle 102, and therefore many press-fitting operations were required for assembling these parts together. And besides, the pulsar ring 106 must be highly precisely positioned relative to the sensor 107, and despite this, the pulsar ring 106 was further press-fitted on the cylindrical portion 103b press-fitted on the hub spindle 102, and therefore it was necessary to highly precisely control interference for these press-fitting operations. As a result, many steps were required for the press-fitting operations when assembling this sensor-equipped rolling bearing apparatus, thus inviting a problem that its production cost increased.

### SUMMARY OF THE INVENTION

This invention has been made in view of the above circumstances, and an object of the invention is to provide a sensor-equipped rolling bearing apparatus in which a process for press-fitting operations is simplified, and a production cost of the bearing apparatus can be reduced.

According to the present invention, there is provided a sensor-equipped rolling bearing apparatus comprising:
a hub spindle including a flange formed at a one end portion thereof, a wheel being adapted to be mounted on the flange;
an outer ring concentrically disposed around an outer periphery of the hub spindle;
first and second inner rings which are fitted on the hub spindle so as to rotate together with the hub spindle, and includes smaller-diameter end portions opposed to each other, respectively;
a plurality of rolling elements disposed between the outer ring and the first and second inner ring;
a sensor which that detects a rotating state of the hub spindle; and
a cylindrical portion that is formed integrally at one of the smaller-diameter end portions of the first and second inner rings, and extends toward the other smaller-diameter end portion in an axial direction thereof,
wherein the cylindrical portion includes a detection portion that is integrally formed on an outer peripheral surface thereof and opposed to the sensor for enabling the sensor to detect the rotating state.

In the sensor-equipped rolling bearing apparatus of this construction, the detection portion is integrally formed on the outer peripheral surface of the cylindrical portion formed integrally at the end portion of the inner ring, and therefore an annular pulsar ring having a detection portion as in the above conventional example does not need to be used, and such a pulsar ring does not need to be press-fitted on the inner ring. Therefore, the number of the component parts of the sensor-equipped rolling bearing apparatus is reduced, and besides the press-fitting process can be simplified, and furthermore it is not necessary to control interference for this fitting process . As a result, the production cost of the sensor-equipped rolling bearing apparatus can be reduced.

Preferably, an outer diameter of the cylindrical portion is smaller than an outer diameter of the smaller-diameter end portion at which the cylindrical portion is formed. In this case, when the inner ring having the cylindrical portion formed thereon is inserted into the inner periphery of the outer ring with the rolling elements interposed therebetween in the assembling operation, the cylindrical portion will not interfere with the other members, and the sensor-equipped rolling bearing apparatus can be assembled easily.

Furthermore, a slanting surface may be formed on an end portion of the outer peripheral surface of the cylindrical portion in such a manner that it is slanting to decrease in diameter gradually toward an end surface of the cylindrical portion. In this case, also, the cylindrical portion will not interfere with the other members in the assembling operation as described above, and therefore the sensor-equipped rolling bearing apparatus can be easily assembled.

In the sensor-equipped rolling bearing apparatus of the present invention, the number of the components parts of the sensor-equipped rolling bearing can be reduced, and also the process for the press-fitting operation is simplified, and therefore the production cost of the bearing apparatus can be reduced.

### BRIEF DESCRIPTION OF THE DRAWINGS

Fig. 1 is a cross-sectional view showing the construction of one preferred embodiment of a sensor-equipped rolling bearing apparatus of the invention.
Fig. 2 is a schematic cross-sectional view of an important portion taken along the line II-II of Fig. 1.
Fig. 3 is a cross-sectional view of an important portion of another embodiment of a sensor-equipped rolling bearing apparatus of the invention.

### DETAILED DESCRIPTION OF PREFERRED EMBODIMENTS

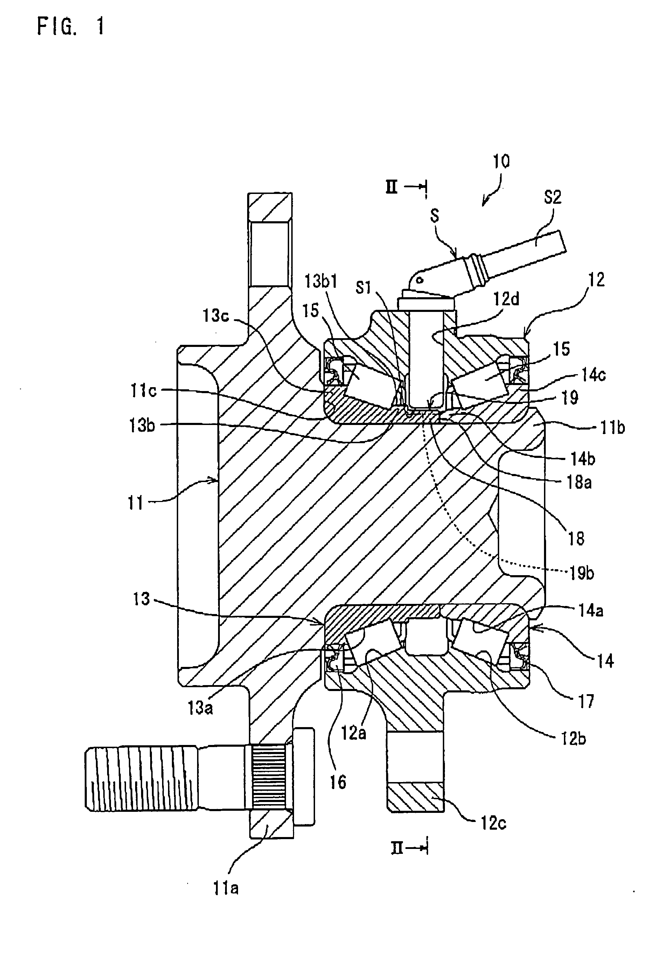

A preferred embodiment of the present invention will now be described with reference to the accompanying drawings. Fig. 1 is a cross-sectional view showing the construction of one preferred embodiment of a sensor-equipped rolling bearing apparatus of the invention. This sensor-equipped rolling bearing apparatus 10 is designed to rotatably support a wheel of a vehicle (such as an automobile) relative to a suspension apparatus.

In the drawings, the sensor-equipped rolling bearing apparatus 10 comprises a hub spindle 11 for mounting a wheel (not shown) thereon, an outer ring 12 concentrically disposed around an outer periphery of the hub spindle 11, a sensor S fixed to the outer ring 12, a pair of first and second inner rings 13 and 14 fixedly fitted on an outer peripheral surface of the hub spindle 11, a plurality (first row) of tapered rollers (rolling elements) 15 disposed between the outer ring 12 and the first inner ring 13, a plurality (second row) of tapered rollers (rolling elements) 15 disposed between the outer ring 12 and the second inner ring 14, and seal members 16 and 17 for respectively sealing annular gaps between the outer ring 12 and the first and second inner rings 13 and 14.
The hub spindle 11 is a member forming an axle on which the wheel is mounted for rotation therewith. A flange 11a for the mounting of the wheel thereon is formed at one end portion of the hub spindle 11 which is disposed at the outer side of the vehicle when the sensor-equipped rolling bearing apparatus 10 is mounted on the vehicle.
The outer ring 12 is a fixed ring which is fixed to the vehicle, and first and second outer ring raceways 12a and 12b are formed on the inner peripheral surface of the outer ring 12, and the first row of tapered rollers 15 are disposed in rolling engagement with the first outer ring raceway 12a, while the second row of tapered rollers 15 are disposed in rolling engagement with the second outer ring raceway 12b. A mounting flange 12c for mounting on the suspension apparatus (not shown) of the vehicle is formed on the outer peripheral surface of the outer ring 12. A mounting hole 12d is formed in the outer ring 12, and extends from the outer peripheral surface thereof to the inner peripheral surface thereof, and is disposed between the first and second outer ring raceways 12a and 12b. The sensor S is inserted in the mounting hole 12d, and is fixed thereto.

The sensor S has a detecting portion S1 formed at its distal end, and this detecting portion S1 is disposed in opposed relation to a detection portion 19 (described later). The distal end of the sensor S is inserted into the mounting hole 12d in the outer ring 12 such that the detecting portion S1 is exposed at the inner periphery of the outer ring 12 in opposed relation to the detection portion 19, and in this state, the sensor S is fixed to the mounting hole 12d.
The sensor S comprises, for example, an eddy current-type displacement sensor, and produces a magnetic field between it and the detection portion 19, and detects a change of a magnetic flux density in accordance with the rotation of the bearing by the detecting portion S1, and this change is outputted as a detection (voltage) signal to a control portion (such as an ECU not shown) of the vehicle via a wire harness S2.

The first inner ring 13 is a rotatable ring which is fixedly fitted on the outer peripheral surface of the hub spindle 11 for rotation therewith. A first inner ring raceway 13a opposed to the first outer ring raceway 12a is formed on the outer peripheral surface of the first inner ring 13. The first inner ring 13 includes a larger rib portion 13c formed at its larger-diameter end thereof, and a smaller rib portion 13b formed at its smaller-diameter end portion thereof. A cylindrical portion 18 is formed integrally at an end of the smaller rib portion (smaller-diameter end portion) 13b, and extends axially therefrom toward an end surface of a smaller rib portion 14b (described later) of the second inner ring 14.
An outer diameter of the cylindrical portion 18 is smaller than an outer diameter of an outer peripheral surface 13b1 of the smaller rib portion 13b. Therefore, when the inner ring 13 having the cylindrical portion 18 formed thereon is inserted into the inner periphery of the outer ring 12 with the tapered rollers 15 interposed therebetween in the assembling operation, the cylindrical portion 18 will not interfere with the other members, and the sensor-equipped rolling bearing apparatus 10 can be assembled easily.
The detection portion 19 is integrally formed at the outer peripheral surface of the cylindrical portion 18 in opposed relation to the detecting surface S1 of the sensor S described above. That is, the outer peripheral surface of the cylindrical portion 18 is designed to function as the detection portion 19 for the sensor S.

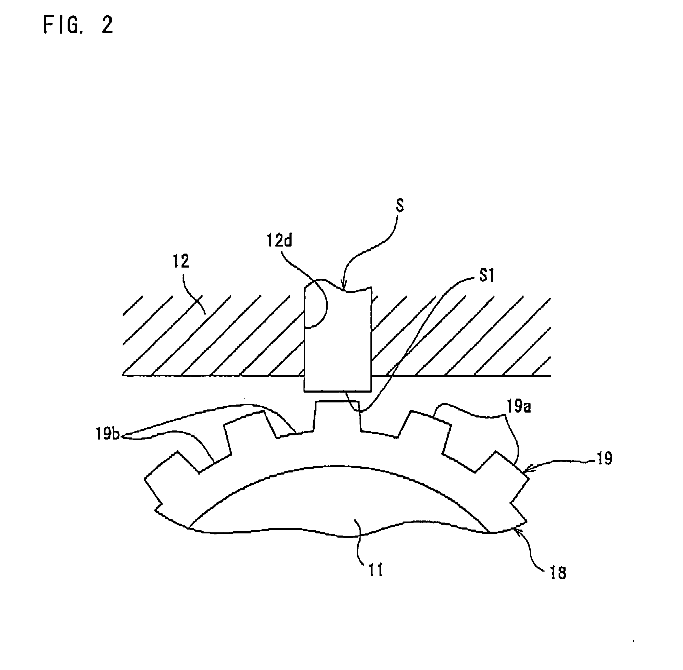

Fig. 2 is a schematic cross-sectional view of an important portion taken along the line II-II of Fig. 1. In Fig. 2, dimensions of groove portions 19b (described later) in radial and circumferential directions are shown in an exaggerated manner for better understanding of the illustration. As shown in Fig. 2, the detection portion 19 of the cylindrical portion 18 includes a base surface 19a defining the outermost peripheral surface of the cylindrical portion 18, and the plurality of groove portions 19b recessed radially inwardly from the base surface 19a and arranged at equal intervals in the circumferential direction. The plurality of groove portions 19b are formed in the outer peripheral surface of the cylindrical portion 18, and extend along the axis thereof. When the detection portion 19 is disposed in opposed relation to the detecting surface S1 of the sensor S, the base surface 19a and the groove portions 19b form alternate convex and concave portions which vary an air gap between the detection portion 19 and the detecting surface S1. The first inner ring 13 rotates together with the hub spindle 11, and when the base surface 19a and the groove portions 19b are sequentially brought into opposed relation to the detecting surface S1, the air gap is changed, thereby changing a detection result (sensor output) of the sensor S.

Referring back to Fig. 1, the second inner ring 14, like the first inner ring 13, is a rotatable ring which is fixedly fitted on the outer peripheral surface of the hub spindle 11 for rotation therewith. A second inner ring raceway 14a opposed to the second outer ring raceway 12b is formed on the outer peripheral surface of the second inner ring 14. The second inner ring 14 includes a larger rib portion 14c formed at its larger-diameter end thereof, and the smaller rib portion 14b formed at its smaller-diameter end thereof. The second inner ring 14 is fitted on the hub spindle 11 in such a manner that the end surface of the smaller rib portion 14b is held against an end surface 18a of the cylindrical portion 18 of the first inner ring 13. A radially-extending press-clamping portion 11b formed at the other end of the hub spindle 11 abuts against an end surface of the larger rib portion 14c of the second inner ring 14, and a wall portion 11c of the hub spindle 11 abuts against an end surface of the larger rib portion 13c of the first inner ring 13, and the first and second inner rings 13 and 14 are prevented by the press-clamping portion 11b and the wall portion 11c from axial movement.
The first and second inner rings 13 and 14 are arranged as described above such that the ends of their smaller rib portions 13b and 14b are opposed to each other, and the detection portion 19 formed on the cylindrical portion 18 is disposed between these smaller rib portions 13b and 14b.

The first row of tapered rollers 15 are rollably interposed between the first outer ring raceway 12a and the first inner ring raceway 13a, and also the second row of tapered rollers 15 are rollably interposed between the second outer ring raceway 12b and the second inner ring raceway 14a. The two inner rings 13 and 14 and the hub spindle 11 are rotatably supported relative to the outer ring 12. Namely, with this construction, the sensor-equipped rolling bearing apparatus 10 forms the double-row tapered roller bearing.

In the sensor-equipped rolling bearing apparatus 10 of the above construction, when the hub spindle 11 is rotated, the detection portion 19 is rotated in accordance with this rotation. When the detection portion 19 is thus rotated, the air gap between the detecting portion S1 of the sensor S and the detection portion 19 is changed, and a magnetic flux density of a magnetic field between the detecting portion S1 and the detection portion 19 changes in accordance with the rotation of the detection portion 19. The sensor S detects a change of the magnetic flux density in accordance with the rotation of the hub spindle 11 by the detecting portion S1, and outputs the detection signal to the control portion of the vehicle. Then, in the control portion, the rotational speed of the hub spindle 11, that is, the rotational speed of the wheel, is detected, and is used to control the anti-lock braking system or the like of the vehicle.

In the sensor-equipped rolling bearing apparatus 10 of this embodiment having the above construction, the detection portion 19 is integrally formed on the cylindrical portion 18 formed integrally at the end portion of the smaller rib portion 13b. Therefore, an annular pulsar ring having a detection portion as in the above conventional example does not need to be used, and such a pulsar ring does not need to be press-fitted on the inner ring 13. Therefore, the number of the component parts of the sensor-equipped rolling bearing apparatus 10 is reduced, and besides the press-fitting process can be simplified, and furthermore it is not necessary to control interference for this fitting process. As a result, the production cost of the sensor-equipped rolling bearing apparatus 10 can be reduced.

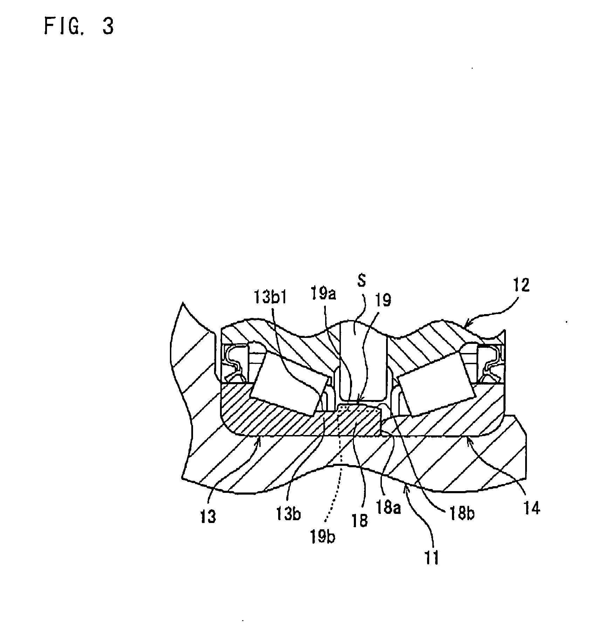

Fig. 3 is a cross-sectional view of an important portion of another embodiment of a sensor-equipped rolling bearing apparatus of the invention. In this embodiment, a slanting surface (tapering surface) 18b is formed on an end portion of an outer peripheral surface of a cylindrical portion 18 formed at an inner ring 13. The other construction is similar to that of the preceding embodiment, and therefore explanation thereof will be omitted.
This slanting surface 18b is formed on an axial distal end portion of a base surface 19a of a detection portion 19, and slants to decrease in diameter gradually (that is, tapering) toward an end surface 18a of the cylindrical portion 18. In other words, the distal end portion of the cylindrical portion 18 is chamfered to provide the slanting surface 18b. Therefore, even if an outer diameter of the cylindrical portion 18 is larger than an outer diameter of a smaller rib portion 13b as in this embodiment, the cylindrical portion 18 will not interfere with the other members when the inner ring 13 is inserted into the inner periphery of an outer ring 12 in the assembling operation, and the sensor-equipped rolling bearing apparatus 10 can be assembled easily.

The sensor-equipped rolling bearing apparatus of the invention is not limited to the above embodiments. In the above embodiments, although the invention is applied to the double row tapered roller bearing apparatus, the invention can be also applied to a bearing apparatus comprising a double row angular contact ball bearing. In this case, a cylindrical portion is formed at an end surface of a smaller-diameter shoulder portion (smaller-diameter end portion) of the inner ring.

## Claims

1. A sensor-equipped rolling bearing apparatus comprising:
a hub spindle including a flange formed at a one end portion thereof, a wheel being adapted to be mounted on the flange;
an outer ring concentrically disposed around an outer periphery of the hub spindle;
first and second inner rings which are fitted on the hub spindle so as to rotate together with the hub spindle, and includes smaller-diameter end portions opposed to each other, respectively;
a plurality of rolling elements disposed between the outer ring and the first and second inner ring;
a sensor which that detects a rotating state of the hub spindle; and
a cylindrical portion that is formed integrally at one of the smaller-diameter end portions of the first and second inner rings, and extends toward the other smaller-diameter end portion in an axial direction thereof,
wherein the cylindrical portion includes a detection portion that is integrally formed on an outer peripheral surface thereof and opposed to the sensor for enabling the sensor to detect the rotating state.

2. The sensor-equipped rolling bearing apparatus according to claim 1, wherein an outer diameter of the cylindrical portion is smaller than an outer diameter of the smaller-diameter end portion at which the cylindrical portion is formed.

3. The sensor-equipped rolling bearing apparatus according to claim 1, wherein the cylindrical portion includes a slanting surface formed on an end portion of the outer peripheral surface thereof so as to slant to decrease in diameter gradually toward an end surface of the cylindrical portion.
